# FASCICULE DE BREVET EUROPEEN

(11) **EP 1 811 882 B1**
(45) Date de publication et mention de la délivrance du brevet: **26.05.2010**
(21) Numéro de dépôt: 05817320.4
(22) Date de dépôt: 10.11.2005
(51) Int. Cl.: A47J 37/07

(54) **BARBECUE TRANSFORMABLE DE FAIBLE ENCOMBREMENT**
KOMPAKTER UMWANDELBARER BARBECUE-GRILL
COMPACT CONVERTIBLE BARBECUE

(30) Priorité: 16.11.2004 FR 0412162
(43) Date de publication de la demande: 01.08.2007
(73) Titulaire: SEB SA, 69130 Ecully (FR)
(72) Inventeur: DAUVERGNE, François, F-74600 Seynod (FR); SIMOND, Thierry, F-73360 Saint Pierre de Genebroz (FR); LEQUY, David, F-73000 Chambery-le-Vieux (FR)
(74) Mandataire: Lemoine, Jean-Sébastien
(86) Numéro de dépôt international: PCT/FR2005/002809
(87) Numéro de publication internationale: WO 2006/053968

(56) Documents cités:
- DE-U1- 8 800 260
- US-A1- 2004 112 361
- US-A1- 2004 118 393

## Description

La présente invention concerne un barbecue transformable dont les opérations permettant sa transformation pour son rangement et son utilisation sont particulièrement simples et rapides à réaliser.

On connaît un barbecue transformable entre une configuration d'utilisation et une configuration de rangement, du type comprenant un corps de cuisson adapté à cuire un aliment, un couvercle, et au moins un autre élément séparable du corps de cuisson, le couvercle coopérant avec le corps de cuisson de sorte que, quand le barbecue est en configuration de rangement, il recouvre le corps de cuisson et forme avec ce dernier une enceinte de rangement pour l'élément séparable. Un barbecue de ce type est connu du document DE8800260U.

Cependant, le transport d'un tel barbecue en configuration rangée pose de nombreux problèmes : les composants du barbecue peuvent être égarés, et, à moins de disposer d'un emballage (qui en outre doit être résistant), il est nécessaire de transporter les éléments constitutifs en plusieurs fois. De plus, en configuration de rangement, le volume qu'il occupe est particulièrement important.

La présente invention vise à réaliser un barbecue qui puisse très facilement et rapidement passer de sa configuration d'utilisation à sa configuration de rangement à encombrement particulièrement réduit et dont le transport en configuration de rangement ne pose pas les problèmes précités.

Selon l'invention, le couvercle est formé par une tablette séparable du corps de cuisson.

La possibilité de réaliser une usité structurelle entre le couvercle et le corps de cuisson quand le barbecue est en position de rangement facilite grandement son transport, et permet de réaliser une enceinte délimitée par ces deux éléments constitutifs dans laquelle les autres éléments peuvent être rangés.

D'autres avantages et particularités apparaîtront dans la description des trois modes de réalisation donnés à titre d'exemples non limitatifs et illustrés par les dessins annexés.

Les figures 1 à 8 sont des vues en perspective d'un barbecue conforme à un premier mode de réalisation qui ne fait pas partie de la présente invention, ces figures illustrant les étapes de passage du barbecue de sa configuration d'utilisation à sa configuration de rangement,

La figure 9 est une vue en perspective d'un barbecue conforme à un second mode de réalisation qui ne fait pas partie de la présente invention, cette figure correspondant à l'étape illustrée par la figure 4 du premier mode de réalisation,

La figure 10 est une vue en perspective d'un barbecue, conforme à un troisième mode de réalisation, dans sa configuration d'utilisation,

La figure 11 est une vue en perspective d'un barbecue, conforme au troisième mode de réalisation, dans sa configuration de rangement,

La figure 12 est une vue similaire à la figure 11, le barbecue étant représente retourné, la tablette étant séparée du foyer,

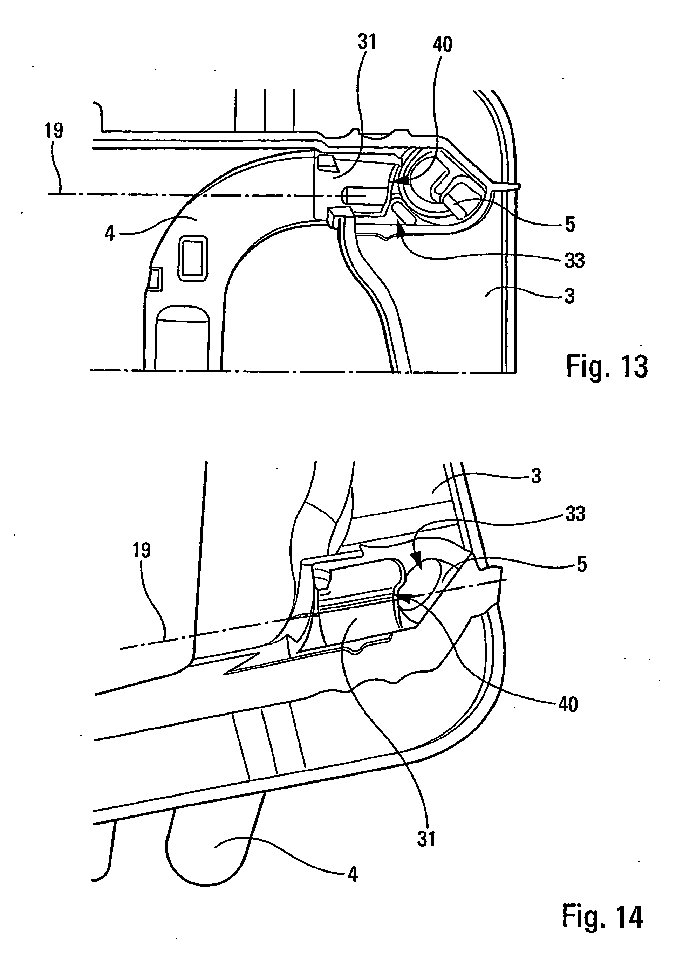

La figure 13 est une vue de dessous illustrant le système de verrouillage d'un pied à la tablette par une entretoise, le pied étant verrouillé, et

La figure 14 est une vue de dessous et de côté similaire à la figure 13, le pied n'étant pas encore

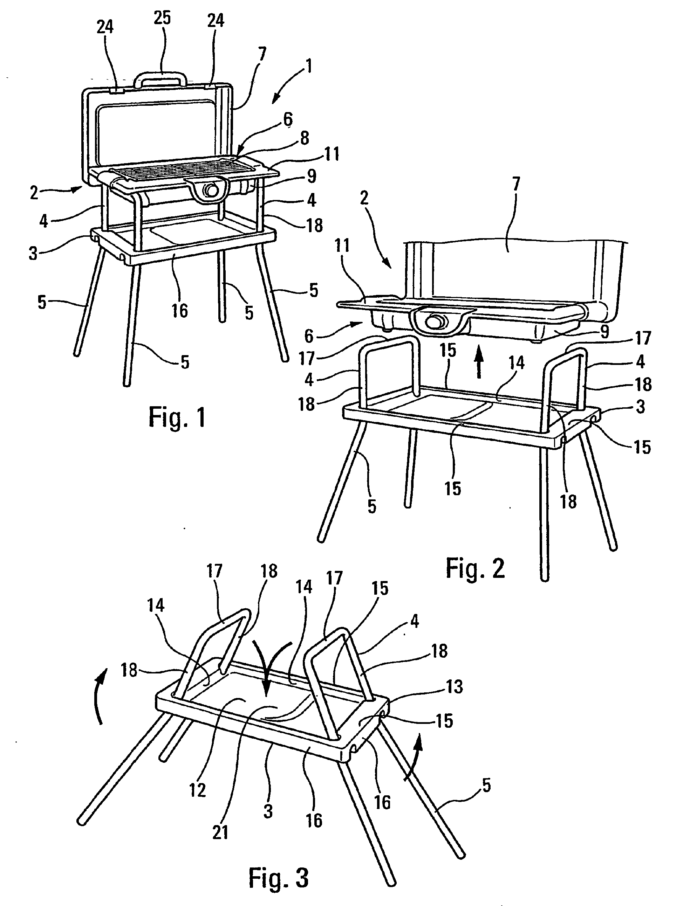

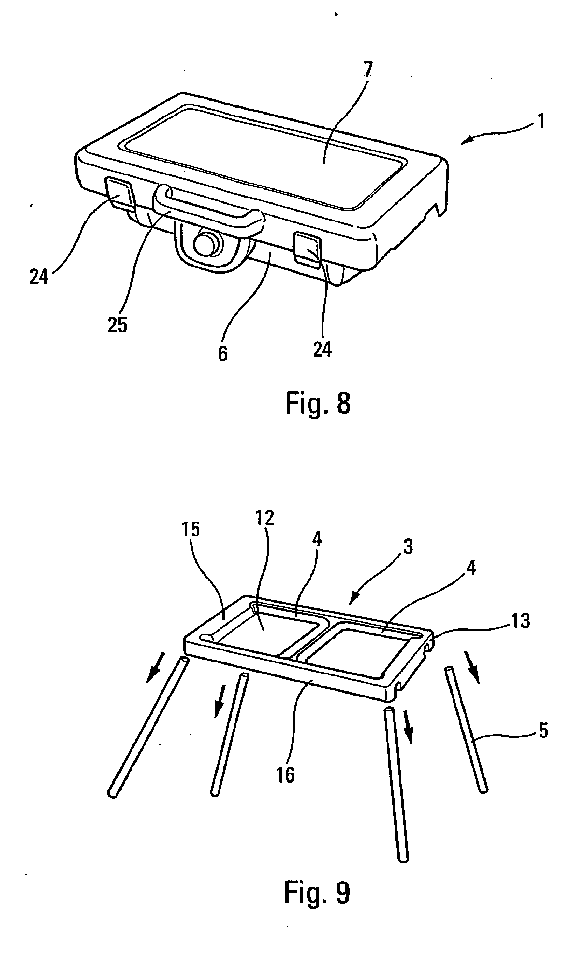

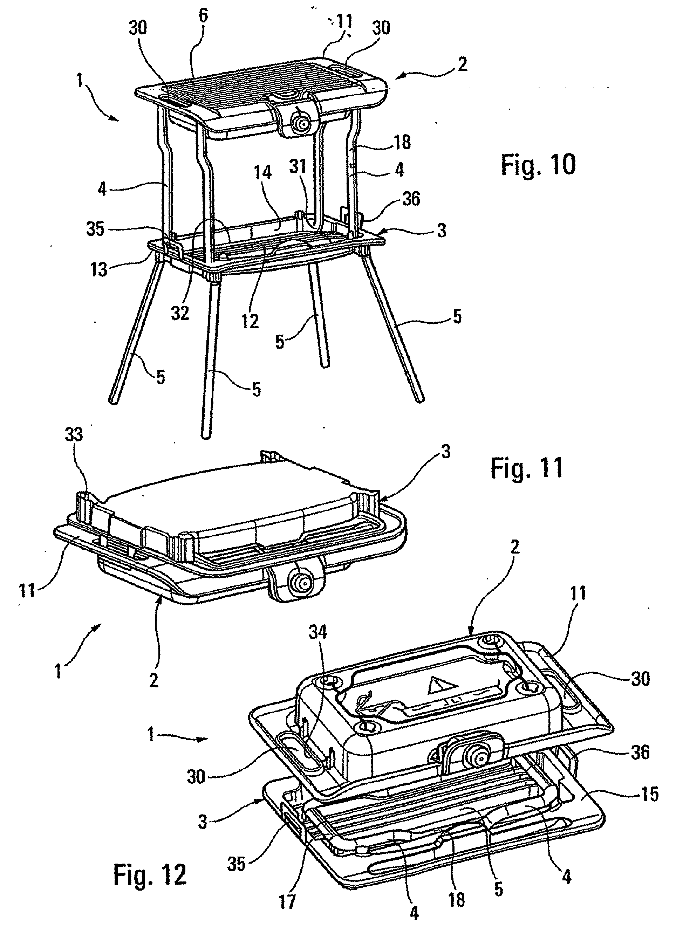

On peut voir aux figures 1 à 12 un barbecue 1 transformable entre une configuration d'utilisation (figures 1 et 10) dans laquelle il peut être utilisé pour cuire des aliments, et une configuration de rangement (figures 8 et 11) dans laquelle il occupe un volume particulièrement restreint.

Le barbecue 1 comprend un foyer 2, une tablette 3, des entretoises 4 (en l'occurrence deux) et des pieds 5 (en l'occurrence quatre).

Dans les deux premiers modes de réalisation, le foyer 2, adapté à cuire les aliments, comprend un corps de cuisson 6 et un couvercle 7 qui est monté pivotant par rapport au corps de cuisson 6. Le couvercle 7 est mobile entre une position ouverte (voir les figures 1, 2, 6, et 7) dans laquelle le corps de cuisson 6 peut être utilisé pour cuire les aliments, et une position fermée (voit la figure 8) dans laquelle il recouvre ce dernier. Dans le troisième mode de réalisation, le foyer 2 ne comprend qu'un corps de cuisson 6.

Dans les présents modes de réalisation, le corps de cuisson 6 comprend une grille de cuisson 8, une résistance électrique de chauffe, une cuve 9 et un réflecteur 10.

La cuve 9 (en l'occurrence de forme parallélépipédique) est adaptée à contenir de l'eau, sert de corps principal au barbecue 1 et, dans le présent mode de réalisation, comprend un rebord périphérique 11 s'étendant horizontalement et bordant son ouverture. Dans les deux premiers modes de réalisation, le couvercle 7 est articulé par l'un des côtés de ce rebord 11 (le côté arrière). Dans le troisième mode de réalisation, une ouverture 30 est réalisée de chaque côté latéral du rebord 11, les deux ouvertures 30 faisant office de poignées de manipulation de la cuve 9 et donc du foyer 2.

La grille de cuisson 8 est adaptée à supporter les aliments pendant l'opération de cuisson. Dans les deux premiers modes de réalisation, des poignées sont solidarisées à la grille 8 et permettent sa manipulation indépendamment de la cuve 9. Quand le foyer 2 est dans sa configuration de fonctionnement, la grille 8 est disposée au niveau de l'ouverture de la cuve 9, ses poignées prenant appui contre le rebord 11 de cette dernière.

La résistance électrique est adaptée à fournir à l'aliment l'énergie thermique nécessaire pour sa cuisson. Dans les présents modes de réalisation, quand le foyer 2 est dans sa configuration d'utilisation, elle est disposée sous la grille 8 et est solidarisé à un boîtier de connexion électrique dans lequel sont situés les différents éléments permettant son alimentation et sa régulation, ce boîtier prenant appui sur le côté avant du rebord 11 de la cuve 9.

Le réflecteur 10 (en l'occurrence de forme parallélépipédique) est adapté à flotter dans la cuve, à recevoir les graisses et jus de cuisson tombant de l'aliment posé sur la grille de cuisson 8, et à réfléchir, vers celle-ci le rayonnement thermique émis par la résistance électrique. Dans les présents modes de réalisation, quand le foyer 2 est dans sa configuration d'utilisation, le réflecteur 10, sous la poussée de l'eau, atteint un niveau dans lequel, d'une part, il supporte la résistance électrique et empêche ainsi le pivotement du boîtier de connexion qui entraînerait une coupure de l'alimentation de la résistance électrique, et d'autre part, il vient en butée contre la grille 8.

La tablette 3 est séparable du foyer 2. Elle comprend une surface de travail 12 bordée par un rebord périphérique 13. La surface de travail 2 est adaptée à recevoir -les aliments à cuire ou cuits, les différents ustensiles utilisés pour réaliser la cuisson des aliments... et comprend une face supérieure orientée vers le haut quand le barbecue 1 est dans sa configuration d'utilisation, et face inférieure qui est opposée à la face supérieure. Le rebord périphérique 13 comprend une paroi verticale interne 14 s'étendant vers le haut depuis la périphérie de la face supérieure de la surface de travail 12 et une paroi horizontale 15 s'étendant vers l'extérieur depuis la périphérie de la paroi verticale interne 14. De plus, dans les deux premiers modes de réalisation, le rebord périphérique 13 comprend également une paroi verticale externe 16 s'étendant vers le bas depuis la périphérie de la paroi horizontale 15. Dans les présents modes de réalisation, les largeur et longueur de la tablette 3 correspondent sensiblement à celles de la cuve 9 ou à celles du foyer 2.

Les entretoises 4 sont mobiles par rapport à la tablette 3 et au foyer 2 et, quand le barbecue 1 est dans sa configuration d'utilisation (figures 1 et 10), elles supportent le foyer 2 et prennent appui sur la tablette 3.

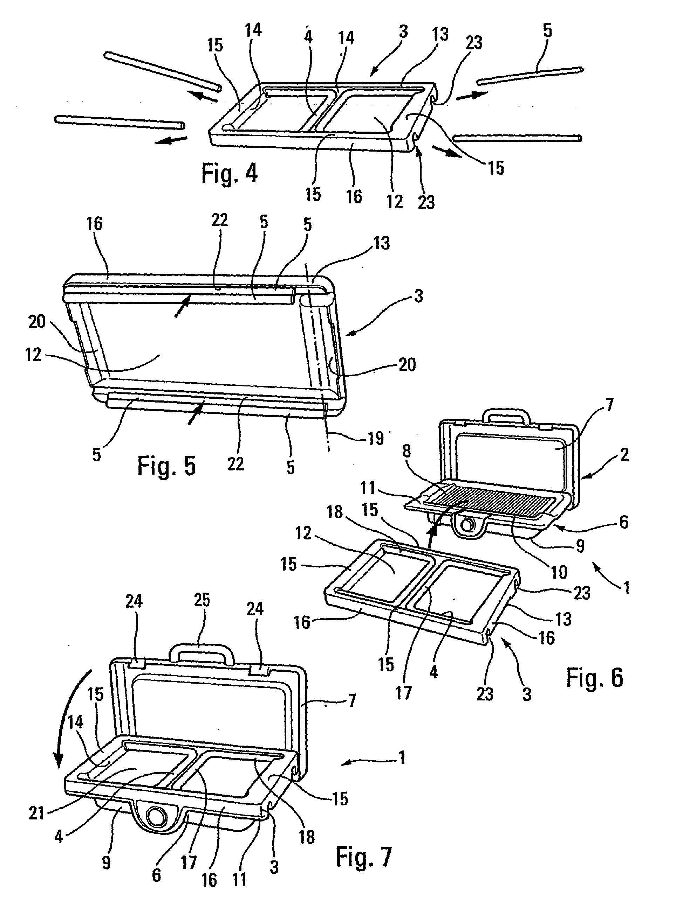

Dans les présents modes de réalisation, les entretoises 4 sont solidarisées à la tablette 3 et mobiles par rapport à cette dernière entre une position de rangement (voir les figures 4, 6, 7, 9 et 12) dans laquelle le barbecue 1 peut être dans sa configuration de rangement et une position d'utilisation (voir les figures 1, 2 et 10) dans laquelle le barbecue 1 peut être dans sa position d'utilisation. Les entretoises 4 sont montées pivotantes par rapport à la tablette 3 entre leur position de rangement dans laquelle elles reposent sur la face supérieure de la surface de travail 12 et s'étendent le long de celle-ci, et leur position d'utilisation dans laquelle elles sont orientées verticalement. La tablette 3 et les entretoises 4 sont conformées de sorte que la position d'utilisation des entretoises 4 est une position stable. Par ailleurs, les entretoises 4 et le foyer 2 sont conformés de façon à pouvoir être solidarisés et désolidarisés, selon la configuration du barbecue 1.

Dans les présents modes de réalisation, chaque entretoise 4 a la forme générale d'un U formé par un tube central 17 et deux tubes latéraux 18.

Chaque tube latéral 18 est relié de façon pivotante, par son extrémité libre 31, à la tablette 3, au niveau de la jonction des parois verticales internes 14 longitudinale et transversale. Dans les deux premiers modes de réalisation, l'axe d'articulation 19 de chaque entretoise 4 étant disposé à l'intérieur d'une cavité 20 délimitée par les parois verticale interne 14, horizontale 15 et verticale externe 16 transversales correspondantes du rebord périphérique 13 de la tablette 3.

Afin de permettre un rangement compact, dans les deux premiers modes de réalisation, la longueur de chaque tube latéral 18 d'une entretoise 4 (la hauteur de l'entretoise 4) correspond sensiblement à la moitié de la longueur de la tablette 3, la barre centrale 17 de chaque entretoise 4 étant quasiment en contact avec la barre centrale 17 de l'autre entretoise 4 quand elles sont dans leur position de rangement. Dans le même but, dans le troisième mode de réalisation, la longueur de chaque tube latéral 18 d'une entretoise 4 (la hauteur de l'entretoise 4) correspond sensiblement à la longueur de la tablette 3, les tubes latéraux 18 d'une entretoise 4 étant disposés le long de ceux de l'autre entretoise 4 en les encadrant.

Le volume délimité par la surface de travail 12 et les parois verticales internes 14 définissent ainsi le logement 21 de rangement des entretoises 4.

Dans les présents modes de réalisation, la stabilisation des entretoises 4 en position d'utilisation est réalisée, d'une part, par, la mise en butée des tubes latéraux 18 contre les parois verticales internes 14 transversales quand les entretoises 4 sont en position d'utilisation, empêchant ainsi un pivotement des entretoises 4 au-delà de leur position d'utilisation, et, d'autre part, par le franchissement d'un point dur réalisé par de petits ergots portés par la tablette 3, empêchant le pivotement involontaire des entretoises 4 vers leur position de rangement.

Par ailleurs, chaque tube central 17 forme une barre d'appui adapté à supporter le foyer 2 quand le barbecue 1 est dans sa configuration d'utilisation. Afin de permettre une fixation sûre et rapide et une séparation rapide, la cuve 9 comprend des rainures adaptées à recevoir les tubes centraux 17, la fixation et la séparation se faisant par le franchissement d'un point dur, les rainures étant élastiquement déformables. De ce fait, une fois séparée des entretoises 4, la cuve 9 (les éléments constitutifs du foyer 2 étant facilement séparables les uns des autres) peut être très aisément manipulée et vidangée.

Les pieds 5 sont mobiles par rapport à la tablette 3 et distincts des -entretoises 4, et, quand le barbecue 1 est dans sa configuration d'utilisation, ils supportent la tablette 3, les entretoises 4 et le foyer 2.

Dans les présents modes de réalisation, les pieds 5 sont séparables de la tablette 3 et peuvent y être solidarisés aussi bien dans leur position d'utilisation (voir les figures 1, 2, 3 et 10) dans laquelle le barbecue 1 peut être dans sa position d'utilisation que dans leur position de rangement (voir les figures 5, 6, 7, 8 et 12) dans laquelle le barbecue 1 peut être dans sa configuration de rangement. En position de rangement, les pieds 5 reposent à côté de la surface de travail 12 (du côté de la face inférieure dans les deux premiers modes de réalisation et du côté de la face supérieur dans le troisième mode de réalisation) alors qu'en position d'utilisation, ils sont orientés verticalement (depuis la face inférieure), ou plus exactement, font un léger angle avec la verticale de façon à former une pyramide dont la base est évasée par rapport au sommet (figures 1 et 10) et, ainsi, à améliorer la stabilité su barbecue 1.

Dans les présents modes de réalisation, chaque pied 5 est formé par un tube.

Dans les deux premiers modes de réalisation, chaque cavité 22 délimitée par les parois verticale interne 15, horizontale 15 et verticale externe 16 longitudinales du rebord périphérique 13 de la tablette 3 forme un logement adapté à recevoir deux pieds 5 dans leur position de rangement. Dans le troisième mode de réalisation, la cavité 32 délimitée la face supérieure de la surface de travail 12 et la paroi verticale interne 14 forme le logement adapté à recevoir les quatre pieds 5 dans leur position de rangement. De ce fait, dans les présents modes de réalisation, la longueur de chaque pied 5 est légèrement inférieure à la longueur de la tablette 3.
Afin de permettre leur fixation dans leur logement, chaque cavité 22,32 comprend des ergots élastiquement déformables formant un point dur leur empêchant toute sortie involontaire.

Dans le premier mode de réalisation, la tablette 3 comprend des ouvertures de passage 23 permettant la fixation des pieds 5 aux entretoises 4 en position d'utilisation au travers de la tablette 3. L'extrémité libre 31 de chaque tube latéral 18 d'une entretoise 4 (extrémité située au niveau de l'axe de pivotement 19) est conformée de façon à pouvoir recevoir, par emmanchement, l'extrémité supérieure d'un pied 5. Un dispositif connu en soi (du type ergot monté élastiquement dans un tube adapté à traversé une ouverture réalisée dans un autre tube) permet de fiabiliser et de faciliter la fixation des pieds 5 aux entretoises 4 et de faciliter leur séparation. En outre, ces ouvertures de passages 23 permettent la liaison des pieds 5 aux entretoises 4 quelle que soit la position des entretoises, comme on peut le voir à la figure 3).

Chaque pied 5 présente une légère déformation à proximité de l'extrémité s'emmanchant dans l'entretoise 4 de sorte que, quand l'entretoise 4 est dans sa position d'utilisation verticale, le pied 5 est légèrement incliné.

Les figures 1 à 8 illustrent la transformation d'un barbecue conforme au premier mode de réalisation, de sa configuration d'utilisation à sa configuration de rangement.

A la figure 1, le barbecue 1 est dans sa configuration d'utilisation, le foyer 2 reposant sur les tubes centraux 17 des entretoises 4.

A la figure 2, le foyer 2 est séparé des tubes centraux 17 des entretoises 4 qui sont en position d'utilisation.

A la figure 3, les entretoises 4 auxquelles les pieds 5 sont solidarisés, sont pivotées en direction de leur position de rangement.

A la figure 4, les pieds 5 sont séparés des entretoises 4 qui sont rangées dans leur logement 21 situé du côté de la face supérieure de la tablette 3.

A la figure 5, les pieds 5 sont rangés dans leurs logements 22 situés du côté de la face inférieure de la tablette 3.

A la figure 6, la tablette 3 (avec les pieds 5 et les entretoises 4 correctement rangés de manière à ne pas faire saille) est posée au dessus du corps de cuisson 3.

A la figure 7, le couvercle 7 se referme sur la tablette 3 qui recouvre le rebord périphérique 11 de la cuve 9 sans y faire saillie.

A la figure 8, le barbecue 1 est dans sa configuration de rangement dans laquelle il ressemble à une valise, le couvercle 7 étant verrouillé à la cuve 9 par l'intermédiaire de verrous 24, enfermant la tablette 3. Il peut être facilement transporté grâce à une poignée 25.

Ainsi, le barbecue 1 en configuration de rangement occupe le même volume que le foyer 2 quand le couvercle 7 est fermé, les entretoises 4 et les pieds 5 étant logés dans la tablette 3 qui est disposée entre la cuve 9 et le couvercle 7.

La figure 9 illustre une étape du procédé de rangement d'un barbecue conforme au second -mode de réalisation. Selon ce mode de réalisation, les pieds 5, en position d'utilisation, sont fixés directement à la tablette 3 par emmanchement de l'une de leur extrémité dans des orifices de fixation 33 réalisés du côté de la face inférieure de la tablette 3.

Dans le troisième mode de réalisation, la tablette 3 comprend des orifices de fixation 33 similaires à ceux du second mode de réalisation, et les pieds 5, en position d'utilisation, sont également fixés directement à la tablette 3 par emmanchement de l'une de leur extrémité dans des orifices de fixation 33. Par ailleurs, les entretoises 4, les pieds 5 et la tablette 3 sont conformées de sorte que les entretoises 4 en position d'utilisation verrouillent les pieds 5 dans leur position d'utilisation. A cet effet, l'extrémité libre 31 de chaque entretoise 4 (extrémité située au niveau de l'axe de pivotement 19) débouche au moins partiellement dans l'orifice de fixation 33 correspondant et présente une surface de came 40 adaptée à permettre l'introduction et le dégagement du pied 5 correspondant dans l'orifice de fixation 33 quand l'entretoise 4 est dans sa position de rangement et à y coincer le pied 5 quand l'entretoise 4 est dans sa position d'utilisation. Afin d'améliorer le coincement des pieds 5 par les entretoises 4, l'extrémité supérieur de chaque pied 5 peut présenter avantageusement une surface de verrouillage adaptée à coulisser le long de la surface de came 40 et à la dépasser quand l'entretoise 4 correspondante est dans sa position de rangement et à y venir en butée quand l'entretoise 4 est dans sa position d'utilisation.

Par ailleurs, dans le troisième mode de réalisation, afin d'avoir la même possibilité de transporter le barbecue en configuration de rangement sous forme de valise, le corps de cuisson 6 (et plus précisément, la cuve 9) comporte des moyens de fixation 34 qui sont adaptés à coopérer avec des moyens complémentaires de fixation 35 portés par la tablette 3 de sorte que cette dernière, en recouvrant le corps de cuisson 6, forme un couvercle verrouillable au foyer 2. Dans ce mode de réalisation, les moyens de fixation 34 et les moyens complémentaires de fixation 35 coopèrent par encliquetage. Les moyens complémentaires de fixation 35 sont formés par des ergots 35 qui sont portés par des poignées 36 permettant la manipulation de la tablette 3. Ces poignées de tablette 36 s'étendent verticalement du rebord 13 (de façon plus précise, de l'extrémité libre de la paroi horizontale 14) de la tablette 3. Les moyens de fixation 34 sont formés par la partie intérieure de la périphérie des ouvertures 30 faisant office de poignées de foyer 2.

Dans le troisième mode de réalisation, il est possible d'équiper le barbecue 1 d'un pare-vent (fonction réalisée dans les deux premiers modes de réalisation par le couvercle 7 en position ouverte) amovible pouvant être rangé dans la valise.

## Revendications

1. Barbecue (1) transformable entre une configuration d'utilisation et une configuration de rangement, comprenant un corps de cuisson (6) adapté à cuire un aliment, un couvercle (3), et au moins un autre élément (4,5,8,10) séparable du corps de cuisson (6), le couvercle (3) coopérant avec le corps de cuisson (6) de sorte que, quand le barbecue (1) est en configuration de rangement, il recouvre le corps de cuisson (6) et forme avec ce dernier une enceinte de rangement pour l'élément séparable (3,4,5,8,10), **caractérisé en ce que** le couvercle (3) est formé par une tablette (3) séparable du corps de cuisson (6).

2. Barbecue (1) selon la revendication 1, **caractérisé en ce que** le corps de cuisson (6) comporte des moyens de fixation (34) qui sont adaptés à coopérer avec des moyens complémentaires de fixation (35) portés par le couvercle (7,3) de façon à former une enceinte verrouillable.

3. Barbecue (1) selon la revendication 2, **caractérisé en ce que** les moyens de fixation (34) et les moyens complémentaires de fixation (35) coopèrent par encliquetage.

4. Barbecue (1) selon la revendication 3, **caractérisé en ce que** les moyens complémentaires de fixation (35) sont formés par des ergots (35) portés par des poignées de tablette (36) qui s'étendent verticalement du rebord (13) de la tablette (3) et qui traverses des ouvertures (30) réalisées dans la rebord périphérique (11) du corps de cuisson (6) faisant office de poignées de foyer.

5. Barbecue (1) selon l'une des revendications 1 à 4, **caractérisé en ce qu'**il comprend des pieds (5) supportant la tablette (3) et le corps de cuisson (6) quand le barbecue (1) est dans sa configuration d'utilisation, et mobiles par rapport à ces derniers, la tablette (3) comprenant des logements (22) adaptés à recevoir les pieds (5) quand le barbecue (1) est dans sa configuration de rangement.

6. Barbecue (1) selon la revendication 5, **caractérisé en ce que** les pieds (5) sont séparables de la tablette (3).

7. Barbecue (1) selon la revendication 5 ou 6, **caractérisé en ce que** chaque pied (5) est conformé de façon à être fixé, en position d'utilisation, directement à la tablette (3) qui comprend des orifices de fixation (33) destinés à cet effet.

8. Barbecue (1) selon l'une des revendications 5 à 7, **caractérisé en ce qu'**il comprend des entretoises (4) distinctes des pieds (5), mobiles par rapport à la tablette (3) et au corps de cuisson (6), et qui, quand le barbecue (1) est dans sa configuration d'utilisation, prennent appui sur la tablette (3) et supportent le corps de cuisson (6).

9. Barbecue (1) selon la revendication 8, **caractérisé en ce que** la tablette (3) comprend des logements (21) adaptés à recevoir les entretoises (4) quand le barbecue (1) est dans sa configuration de rangement.

10. Barbecue (1) selon la revendication 8 ou 9, **caractérisé en ce que** les entretoises (4) sont solidarisées à la tablette (3) et montées mobiles par rapport à cette dernière entre une position de rangement et une position d'utilisation.

11. Barbecue (1) selon l'une des revendications 8 à 10, **caractérisé en ce que** les entretoises (4) sont montées pivotantes par rapport à la tablette (3).

12. Barbecue (1) selon la revendication 11 dépendante de la revendication 7, **caractérisé en ce que** l'extrémité (31) de chaque entretoise (4) située au niveau de l'axe de pivotement (19) de l'entretoise (4) débouche au moins partiellement dans les orifices de fixation (33) et présente une surface de came (40) adaptée à permettre l'introduction et le dégagement du pied (5) correspondant de l'orifice de fixation (33) correspondant quand l'entretoise (4) est dans sa position de rangement et à y coincer le pied (5) quand l'entretoise (4) est dans sa position d'utilisation.

13. Barbecue (1) selon la revendication 12, **caractérisé en ce que** l'extrémité supérieure de chaque pied (5) présente une surface de verrouillage adaptée à coulisser le long de la surface de came et à la dépasser quand l'entretoise (4) correspondante est dans sa position de rangement et à venir en butée contre la surface de came quand l'entretoise (4) est dans sa position d'utilisation.

## Claims

1. Barbecue (1) capable of being converted between a use configuration and a storage configuration, comprising a cooking body (6) suitable for cooking food, a cover (3), and at least one other element (4, 5, 8, 10) capable of being separated from the cooking body (6), wherein the cover (3) cooperates with the cooking body (6) so that, when the barbecue (1) is in the storage configuration, it covers the cooking body (6) and forms with the latter a storage chamber for the separable element (3, 4, 5, 8, 10), **characterised in that** the cover (3) is formed by a shelf (3) separable from the cooking body (6).

2. Barbecue (1) according to claim 1,
**characterised in that** the cooking body (6) comprises attachment means (34), which are suitable for cooperating with complementary attachment means (35) borne by the cover (7, 3) so as to form a lockable chamber.

3. Barbecue (1) according to claim 2,
**characterised in that** the attachment means (34) and the complementary attachment means (35) cooperate by a ratchet assembly.

4. Barbecue (1) according to claim 3,
**characterised in that** the complementary attachment means (35) are formed by lugs (35) borne by shelf handles (36), said shelf handles extending vertically from the edge (13) of the shelf (3), and passing through openings (30) formed in the peripheral edge (11) of the cooking body (6), said opening (30)) acting as handles for the barbecue pit.

5. Barbecue (1) according to one of claims 1 to 4, **characterised in that** it includes legs (5) supporting the shelf (3) and the cooking body (6) when the barbecue (1) is in its use configuration, and capable of moving with respect to the latter, wherein the shelf (3) includes housings (22) suitable for receiving the legs (5) when the barbecue (1) is in its storage configuration.

6. Barbecue (1) according to claim 5,
**characterised in that** the legs (5) are capable of being separated from the shelf (3).

7. Barbecue (1) according claim 5 or 6,
**characterised in that** each leg (5) is designed so as to be attached, in the use position, directly to the shelf (3) which includes attachment openings (33) intended for this purpose.

8. Barbecue (1) according to one of claims 5 to 7, **characterised in that** it includes spacers (4) separate from the legs (5), capable of moving with respect to the shelf (3) and to the cooking body (6), and which, when the barbecue (1) is in its use configuration, rest on the shelf (3) and support the cooking body (6).

9. Barbecue (1) according to claim 8,
**characterised in that** the shelf (3) includes housings (21) suitable for receiving the spacers (4) when the barbecue (1) is in its storage configuration.

10. Barbecue (1) according to claim 8 or 9, **characterised in that** the spacers (4) are secured to the shelf (3) and mounted so as to be capable of moving with respect to the latter between a storage position and a use position.

11. Barbecue (1) according to one of claims 8 to 10, **characterised in that** the spacers (4) are mounted so as to pivot with respect to the shelf (3).

12. Barbecue (1) according to claim 11, which is dependent on claim 7, **characterised in that** the end (31) of each spacer (4) located at the level of the pivot axis (19) of the spacer (4) leads at least partially into the attachment openings (33) and has a cam surface (40) suitable for allowing the insertion and release of the corresponding leg (5) into or from the corresponding attachment opening (33) when the spacer (4) is in its storage position, and for holding the leg (5) in place when the spacer (4) is in its use position.

13. Barbecue (1) according to claim 12,
**characterised in that** the upper end of each leg (5) has a locking surface suitable for sliding along the cam surface and passing it when the corresponding spacer (4) is in its storage position, and for coming into contact with the cam surface when the spacer (4) is in its use position.

## Patentansprüche

1. Grillgerät (1), das zwischen einer Gebrauchskonfiguration und einer Lagerungskonfiguration umwandelbar ist, mit einem Grillgehäuse (6), das zum Grillen eines Nahrungsmittels ausgebildet ist, einem Deckel (3) und wenigstens einem weiteren Element (4, 5, 8, 10), das vom Grillgehäuse (6) trennbar ist, wobei der Deckel (3) mit dem Grillgehäuse (6) derart zusammenwirkt, dass, wenn sich das Grillgerät (1) in der Lagerungskonfiguration befindet, dieser das Grillgehäuse (6) abdeckt und mit diesem einen Stauraum für das trennbare Element (3, 4, 5, 8, 10) bildet, **dadurch gekennzeichnet, dass** der Deckel (3) durch ein vom Grillgehäuse (6) trennbares Tablett (3) gebildet ist.

2. Grillgerät (1) nach Anspruch 1, **dadurch gekennzeichnet, dass** das Grillgehäuse (6) eine Befestigungseinrichtung (34) umfasst, die so ausgebildet ist, dass diese mit komplementären Befestigungseinrichtungen (35) zusammenwirken kann, die an dem Deckel (7, 3) abgestützt sind, so dass ein verschließbarer Raum gebildet wird.

3. Grillgerät (1) nach Anspruch 2, **dadurch gekennzeichnet, dass** die Befestigungseinrichtung (34) und die komplementäre Befestigungseinrichtung (35) durch Einrastung zusammenwirken.

4. Grillgerät (1) nach Anspruch 3, **dadurch gekennzeichnet, dass** die komplementäre Befestigungseinrichtung (35) durch von Griffen des Tabletts (36) getragenen Ansätzen (35) gebildet ist, die sich vertikal zum Rand (13) des Tabletts (3) erstrecken und welche durch Öffnungen (30) hindurchgehen, die in dem Umfangsrand (11) des Grillgehäuses (6) ausgebildet sind und als Griffe der Feuerstelle dienen.

5. Grillgerät (1) nach einem der Ansprüche 1 bis 4, **dadurch gekennzeichnet, dass** dieses Füße (5) umfasst, welche das Tablett (3) und das Grillgehäuse (6) abstützen, wenn sich das Grillgerät (1) in seiner Gebrauchskonfiguration befindet, und die in Bezug zu diesen beweglich sind, wobei das Tablett (3) Aufnahmen (22) umfasst, die so ausgebildet sind, dass sie die Füße (5) aufnehmen können, wenn sich das Grillgerät (1) in seiner Lagerungskonfiguration befindet.

6. Grillgerät (1) nach Anspruch 5, **dadurch gekennzeichnet, dass** die Füße (5) von dem Tablett (3) trennbar sind.

7. Grillgerät (1) nach Anspruch 5 oder 6, **dadurch gekennzeichnet, dass** jeder Fuß (5) so ausgebildet ist, dass dieser in der Gebrauchsposition direkt an dem Tablett (3) befestigt ist, welches zu diesem Zweck vorgesehene Befestigungsöffnungen (33) umfasst.

8. Grillgerät (1) nach einem der Ansprüche 5 bis 7, **dadurch gekennzeichnet, dass** dieses von den Füßen (5) unabhängige Streben (4) umfasst, die in Bezug zu dem Tablett (3) und dem Grillgehäuse (6) beweglich sind und die, wenn sich das Grillgerät (1) in seiner Gebrauchskonfiguration befindet, an das Tablett (3) anstoßen und das Grillgehäuse (6) tragen.

9. Grillgerät (1) nach Anspruch 8, **dadurch gekennzeichnet, dass** das Tablett (3) Aufnahmen (21) umfasst, die so ausgebildet sind, dass diese die Streben (4) aufnehmen können, wenn sich das Grillgerät (1) in seiner Lagerungskonfiguration befindet.

10. Grillgerät (1) nach Anspruch 8 oder 9, **dadurch gekennzeichnet, dass** die Streben (4) mit dem Tablett (3) fest verbunden sind und in Bezug auf diese zwischen einer Lagerungsposition und einer Gebrauchsposition beweglich angebracht sind.

11. Grillgerät (1) nach einem der Ansprüche 8 bis 10, **dadurch gekennzeichnet, dass** die Streben (4) in Bezug zu dem Tablett (3) schwenkbar angebracht sind.

12. Grillgerät (1) nach Anspruch 11, abhängig von Anspruch 7, **dadurch gekennzeichnet, dass** ein Ende (31) jeder Strebe (4), das an der Schwenkachse (19) der Strebe (4) liegt, wenigstens teilweise in den Befestigungsöffnungen (33) mündet und eine Nockenfläche (40) aufweist, die so ausgebildet ist, dass sie die Einführung und die Lösung des korrespondierenden Fußes (5) der korrespondierenden Befestigungsöffnung (33) ermöglicht, wenn sich die Strebe (4) in ihrer Lagerungsposition befindet, und dort den Fuß (5) zu verkeilen, wenn sich die Strebe (4) in ihrer Gebrauchsposition befindet.

13. Grillgerät (1) nach Anspruch 12, **dadurch gekennzeichnet, dass** das obere Ende jedes Fußes (5) eine Verriegelungsfläche aufweist, die so ausgebildet ist, dass sich diese entlang der Nockenfläche verschiebt und diese überfährt, wenn sich die korrespondierende Strebe (4) in ihrer Lagerungsposition befindet, und an der Nockenfläche zum Anschlag kommt, wenn sich die Strebe (4) in ihrer Gebrauchsposition befindet.
